# EUROPÄISCHE PATENTANMELDUNG

(11) **EP 4 685 203 A1**
(43) Veröffentlichungstag der Anmeldung: **28.01.2026**
(21) Anmeldenummer: 25187525.8
(22) Anmeldetag: 04.07.2025
(51) Int. Cl.: C09J 5/06, C09J 5/02

(54) **PRIMERZUSAMMENSETZUNG ZUR HERSTELLUNG EINER LÖSBAREN KLEBEVERBINDUNG**

(30) Priorität: 26.07.2024 DE 102024121384; 09.10.2024 DE 102024129178
(71) Anmelder: TESA SE, 22848 Norderstedt (DE)
(72) Erfinder: BAUMANN, Tim, 22848 Norderstedt (DE); OSTERWINTER, Gregor, 22848 Norderstedt (DE); MOEHRKE, Claudia, 22848 Norderstedt (DE); WANG, Shuang, 22848 Norderstedt (DE); VULIN, Antoine, 01000 Bourg-en-Bresse (FR)
(74) Vertreter: tesa SE

(57) **Zusammenfassung**

Primerzusammensetzung zur Herstellung einer lösbaren Klebeverbindung, enthaltend wenigstens die folgenden Bestandteile:
(a) wenigstens ein Acrylat-Styrol-Copolymer; und
(b) wenigstens ein chemisches oder physikalisches Treibmittel.

## Beschreibung

Die vorliegende Erfindung betrifft eine Primerzusammensetzung zur Herstellung einer lösbaren Klebeverbindung sowie einen lösbaren Schichtkörper, ausgebildet und eingerichtet, um nach dauerhafter Verklebung getrennt zu werden. Des Weiteren umfasst die vorliegende Erfindung ein Verfahren zum Lösen einer mittels eines solchen Schichtkörpers bewirkten dauerhaften Verklebung.

In Repairshops beziehungsweise im End-of-Life-Recycling von elektronischen Geräten gewinnt der Wunsch, elektronische Geräte oder auch Automobile reparieren beziehungsweise möglichst weitgehend demontieren und/oder recyceln zu können, aus ökologischen, aber auch aus auch ökonomischen Gründen an Bedeutung.

Es existieren dabei unterschiedliche Arten von elektronischen Geräten, die sich in ihrer Recyclingfähigkeit und auch im Recyclinggrad unterscheiden:
- Haushaltsgroßgeräte (auch weiße Ware genannt): zum Beispiel Waschmaschinen, Kühl- und Gefrierschränke, Herde;
- Haushaltskleingeräte (ebenfalls zur weißen Ware zählend): zum Beispiel Staubsauger, Kaffeemaschinen, Mikrowellen;
- Informations- und Kommunikationstechnik-Geräte: zum Beispiel Computer, Monitore, Drucker, Handys, Telefone;
- Unterhaltungselektronik-Geräte (auch braune Ware genannt): zum Beispiel Fernseher, Videorecorder, Digitalkameras;

Gerade Elektro- und Elektronikgeräte enthalten eine Vielzahl von Stoffen und Materialien. Werden Elektro- und Elektronik-Altgeräte nicht sachgerecht, das heißt zum Beispiel über den Hausmüll entsorgt, kann es aufgrund der zum Teil noch enthaltenen Schadstoffe zu Umweltrisiken kommen. Neben Schadstoffen wie Schwermetallen und FCKW enthalten Elektro- und Elektronik-Altgeräte aber auch eine Reihe von Wertstoffen, die es zurückzugewinnen und somit im Kreislauf zu führen gilt. Werden Elektro- und Elektronik-Altgeräte demgegenüber sachgerecht entsorgt, können so Primärrohstoffe (und damit deren aufwändige Gewinnung) ersetzt und ein wesentlicher Beitrag zur Schonung der natürlichen Ressourcen geleistet werden.

Um diese Ziele erreichen zu können, legt in Deutschland das Gesetz über das Inverkehrbringen, die Rücknahme und die umweltverträgliche Entsorgung von Elektro- und Elektronikgeräten (Elektro- und Elektronikgerätegesetz - ElektroG) in Umsetzung der Richtlinie 2012/19/EU über Elektro- und Elektronik-Altgeräte (so genannte WEEE) konkrete Pflichten für alle relevanten Akteure (Hersteller, Handel, Kommunen, Besitzer, Entsorger) fest. Durch Abfallvermeidung, zumutbare Prüfungen zu Möglichkeiten einer Vorbereitung zur Wiederverwendung ganzer Geräte oder einzelner Bauteile sowie Anforderungen an die weitergehende Verwertung von Abfällen soll ein wesentlicher Beitrag zur Schonung der natürlichen Ressourcen und zur Verringerung der Schadstoffemissionen erzielt werden.

Entsprechende recycling-freundliche Designs sind notwendig, die eine Demontage bei Bedarf (debonding on demand) ermöglichen. Zu den recycling-freundlichen Designs zählen auch wiederlösbare Klebeverbindungen, denn gerade in elektronischen Kleingeräten nimmt die Tendenz, Teile üblicherweise dauerhaft zu verkleben, statt mechanisch lösbar zu verbinden, sehr stark zu.

Die EP 1 814 935 A1 beschreibt ein Verfahren zum Zusammenfügen zweier Substrate mittels Kleben mit mindestens einer Fugendichtung, welche aus einem Polymerwerkstoff und einem Migrationsstoff besteht, wobei dieser fähig ist, an die Grenzfläche zu migrieren, um eine Schicht mit schwacher Kohäsion zu bilden.

Des Weiteren beschreibt es ein Verfahren zum Lösen der zuvor hergestellten Verbindung durch Zuführen von Energie in die Fugendichtung bzw. den Migrationsstoff. Der Migrationsstoff wandert an die Grenzfläche und bewirkt eine Lage mit einer schwachen Kohäsion, wodurch das Trennen der Substrate ermöglicht wird.

Es wird kein Primer offenbart. Es handelt sich um einen Klebstoff, welcher ein Migrationsmittel, welches an die Grenzfläche wandert, enthält. Ein Haftklebeband wird nicht offenbart.

Die WO 00/75254 A1 betrifft eine Zusammensetzung, ihre Verwendung und ein Verfahren zu ihrer Verwendung als Verglasungsklebstoff. Die Zusammensetzung umfasst einen Klebstoff mit darin dispergierten thermoexpandierbaren Mikrokapseln, die als Druckauslöser wirken. Die Mikrokapseln werden durch Wärme ausgelöst, so dass mindestens ein expandierbarer flüchtiger Wirkstoff, der in der Mikrokapselhülle eingekapselt ist, freigesetzt wird.

Die WO 2005/028583 A1 betrifft ein Destrukturierungsmittel (3 bis 40 Gew-%) für eine Klebstoffzusammensetzung. Bei der Polymerbasis handelt es sich um Epoxy-, Acryl- oder Urethantypen. Die Destrukturierungsmittel sind durch Wärme aktivierbar und aus der Familie der Hydrazide (insbesondere pTSH) und besonders die Sulfohydrazide.

Des Weiteren wird ein Aktivator (1 bis 5 Gew-%) aus der Familie der Carbamide verwendet (insbesondere Urea). Es wird noch der Zusammenhang zwischen Viskosität und angestrebter Schichtdicke erwähnt.

Aus der EP 1 111 020 A1 sind Klebstoffzusammensetzungen für lösbare Klebeverbindungen bekannt, wobei diese bei Raumtemperatur feste, thermisch aktivierbare Substanzen zum Entkleben enthalten.

Der Zusatz von thermisch aktivierbaren Substanzen aus der Gruppe von Dicarbonsäuren, Azoverbindungen, Carbonaten, kristallwasserhaltigen Substanzen sowie Polyalkoholen zu handelsüblichen Klebstoffen ermöglicht eine thermische Spaltung der Klebeverbindung. Hierdurch kann eine Verklebung durch Wärme wieder leicht gelöst werden, was ein Recycling der verklebten Bauteile erleichtert.

Die EP 1 611 217 A1 beschreibt ein Verfahren zum Zusammenfügen zweier Träger durch Kleben mit einer Verbindung. Dazu wird auf einen Träger ein Haftprimer zum gesteuerten Abnehmen aufgebracht. Dieser besteht aus einer Polymergrundlage und einem Mittel zur Degradation der Bindung. Das Lösen der Klebeverbindung erfolgt durch Zuführen von Energie, so dass das Degradationsmittel die Bindung von Primer und Träger oder die Masse degradiert wird.

Der Primer kann verdünnt vorliegen, um besonders dünne Schichten aufzubringen. Der Primer besteht aus Polymergrundlage oder einem Wachs und einem Degradationsmittel. Das Degradationsmittel ist pTSH. Als Polymergrundlage für den Primer wird ausschließlich Epoxidharz offenbart. Lösemittel ist Toluol.

Mit der EP 2 519 596 A1 ist ein Verfahren zum Zerlegen eines Verbundes bekannt geworden, bestehend aus zwei Substraten, welche durch eine Verbindungsschicht verklebt sind. Das Polymermaterial für die Verbindungsschicht besteht aus Polyurethan oder Silikon und enthält einen Migrationsstoff, der zu einer der Grenzflächen migriert und das Ablösen einer Grenzfläche durch Einwirkung von Wärme bewirkt. Es muss auf die Aktivierungstemperatur des Migrationsstoffes erwärmt werden. Das Ablösen wird durch das erzeugte Gas herbeigeführt.

Die WO 2021/028457 A1 beschreibt eine entfernbare Zusammensetzung die aus einem oder einem Gemisch von in Alkohol löslichen Polyamid(en), einem expandierbaren Additiv, dessen Expansionstemperatur höher ist als der Schmelzpunkt des Polyamids, besteht. Der Alkohol wird gewählt aus leichten aliphatischen Alkoholen oder Benzylalkohol.

Das in Alkohol lösbare Polyamid ist ein Copolyamid.

Das expandierbare Additiv können temperaturaktivierbare expandierbare Mikrosphären, Azodicarbonamide, expandierbarer Graphit, Polycarboxylsäuren und Sulfonylhydrazide sein. Die Verhältnisse von Polymer und Additiv werden beschrieben.

Die Schrift beschreibt einen durch Mikroballons schäumbaren Primer zum leichten Entfernen von ungewünschter Farbe. Die Basis besteht aus einem Acrylat Harz oder Polyvinylacetat.

Die EP 4 155 360 A1 offenbart einen Primer zur Herstellung einer lösbaren Klebeverbindung, wobei der Primer einen Haftklebstoff umfassend ein Copolymer aus n-Butylacrylat und Vinylcaprolactam sowie thermisch expandierbare Mikroballons enthält. Durch Erwärmen expandieren die Mikroballons, wodurch die Klebeverbindung gelöst werden kann.

Der vorliegenden Erfindung liegt die Aufgabe zugrunde, eine Primerzusammensetzung zur Herstellung einer lösbaren Klebeverbindung bereitzustellen, mit der im Vergleich zum Stand der Technik vor dem Lösen eine Klebeverbindung mit verbesserter Klebkraft erzielt wird. Zudem soll die Klebkraft, wenn das Lösen der Klebeverbindung gewünscht ist, durch eine entsprechende Aktivierung auf einen geringeren Wert reduzierbar sein. Eine weitere Aufgabe der vorliegenden Erfindung besteht somit darin, eine Primerzusammensetzung für einen Schichtkörper zur Verfügung zu stellen, die einerseits eine dauerhafte und sichere Verklebung eines Bauteils mit einem Klebeband ermöglicht, andererseits im Bedarfsfall jedoch eine saubere und sichere Trennung des Klebebands vom Bauteil ermöglicht.

Die Aufgabe wird erfindungsgemäß durch eine Primerzusammensetzung gelöst, wie sie in Anspruch 1 beschrieben ist. Vorteilhafte Ausführungsformen der Primerzusammensetzung sind in den abhängigen Ansprüchen wiedergegeben. Des Weiteren gehören zur erfindungsgemäßen Lösung ein Schichtkörper mit einer Primerschicht, die auf der erfindungsgemäßen Primerzusammensetzung basiert, sowie ein Verfahren zum Lösen des Schichtkörpers. Ein weiterer Gegenstand der Erfindung ist die Verwendung des Schichtkörpers in der Automobilindustrie und/oder der Elektronikindustrie.

Demgemäß betrifft die vorliegende Erfindung eine Primerzusammensetzung zur Herstellung einer lösbaren Klebeverbindung enthaltend wenigstens die folgenden Bestandteile:
(a) wenigstens ein Acrylat-Styrol-Copolymer; und
(b) wenigstens ein chemisches oder physikalisches Treibmittel.

Der Begriff "Primer" ist dem Fachmann im Zusammenhang mit Klebeverbindungen bekannt.

Im erfindungsgemäßen Sinne bedeutet der Begriff "Primer" insbesondere eine auf einem Substrat aufgetragene Grundierung, die in der Lage ist (entweder auf chemischer oder physikalischer Grundlage), mit zwei Materialschichten zu interagieren und deren Haftung zu ermöglichen.

Der Primer wird in der Regel als ein formuliertes Produkt (das in der Regel mehr als eine Komponente enthält) betrachtet, das nach einem bestimmten Verfahren aus der flüssigen Phase aufgetragen wird (Eintauchen in die Oberfläche, Streichen, Sprühen usw.). Nach dieser Definition sollte der Primer nicht nur die Fähigkeit haben, die Haftung zu ermöglichen, sondern auch eine gleichmäßige Grundierungsschicht auf der Oberfläche des Substrats zu bilden, indem seine Viskosität, seine Benetzungseigenschaften, seine Trocknungsgeschwindigkeit usw. angepasst werden.

Im Rahmen der vorliegenden Erfindung wird insbesondere die Zusammensetzung des Primers im Hinblick auf deren Bestandteile und damit die "Primerzusammensetzung" betrachtet und beschrieben.

Dadurch, dass die erfindungsgemäße Primerzusammensetzung (b) wenigstens ein chemisches oder physikalisches Treibmittel enthält, ist eine damit zwischen einem Bauteil und einem Klebeband hergestellte Klebeverbindung durch entsprechende Aktivierung des Treibmittels, insbesondere durch Erwärmen, lösbar.

Überraschenderweise hat sich herausgestellt, dass die hergestellte Klebeverbindung vor der Aktivierung mit wenigstens einem Acrylat-Styrol-Copolymer, also mit dem Bestandteil (a), in der Primerzusammensetzung gegenüber dem Stand der Technik verbessert ist und gleichzeitig nach entsprechender Aktivierung das Lösen der Klebeverbindung mit einer deutlich geringeren Kraft ermöglicht ist.

Die erfindungsgemäße Primerzusammensetzung ermöglicht damit die Herstellung einer stärkeren Klebeverbindung, die sich gleichzeitig bei Bedarf einfacher und sauberer wieder Lösen lässt.

Eine Klebverbindung ist im Rahmen der vorliegenden Erfindung beispielsweise und insbesondere "Iösbar", wenn durch entsprechende Aktivierung eine Herabsetzung der Klebkraft bei 23 °C von zumindest 50 % erfolgt, bevorzugt von zumindest 75 %, erfolgt.

Sämtliche Ausführungen der Beschreibung gelten für die erfindungsgemäße Primerzusammensetzung, den erfindungsgemäßen Schichtkörper, für das erfindungsgemäße Verfahren zum Lösen des Schichtkörpers sowie die Verwendung des Schichtkörpers.

Von der Erfindung sind zudem sämtliche Merkmale, die Gegenstände von jeglichen abhängigen Patentansprüchen sind, umfasst. Ferner sind von der Erfindung Kombinationen einzelner Merkmale miteinander und hierbei auch unterschiedlicher Bevorzugungsstufen umfasst. Somit ist von der Erfindung beispielsweise die Kombination eines ersten als "bevorzugt" gekennzeichneten Merkmals mit einem zweiten als "besonders bevorzugt" gekennzeichneten Merkmals umfasst. Hierbei sind auch im Rahmen von "Ausführungsformen" bezeichnete Gegenstände ebenfalls unterschiedlicher Bevorzugungsstufen mit umfasst.

Das erfindungsgemäß enthaltene (a) wenigstens eine Acrylat-Styrol-Copolymer weist gemäß bevorzugter Ausführungsformen eine zahlenmittlere Molmasse Mₙ gemäß Bestimmung durch GPC (Zahlenmittel der Molekulargewichtsverteilung) von 8.000 bis 30.000 g/mol, besonders bevorzugt von 8.000 bis 20.000 g/mol, auf.

Das erfindungsgemäß enthaltene (a) wenigstens eine Acrylat-Styrol-Copolymer weist gemäß bevorzugter Ausführungsformen eine gewichtsmittlere Molmasse M_{w} gemäß Bestimmung durch GPC (Gewichtsmittel der Molekulargewichtsverteilung) von 25.000 bis 300.000 g/mol, besonders bevorzugt von 25.000 bis 100.000 g/mol, auf.

GPC bedeutet wie dem Fachmann bekannt Gelpermeationschromatographie. Die Messmethode wird unter "Messmethoden" näher beschrieben.

Ein geeignetes Acrylat-Styrol-Copolymer ist beispielsweise als 40 gewichtsprozentige Emulsion in Wasser unter dem Handelsnamen NeoCryl^{®} XK-85, von der Firma Covestro erhältlich.

Gemäß vorteilhafter Ausführungsformen der Erfindung umfasst wenigstens ein Verfahrensschritt bei der Herstellung der erfindungsgemäßen Primerzusammensetzung, dass eine wässrige Emulsion enthaltend 40 Gew.-% Acrylat-Styrol-Copolymer und 60 Gew.-% Wasser zugegeben wird.

Die Primer-Zusammensetzung enthält dementsprechend gemäß dieser Ausführungsformen auch Wasser.

Das Wasser trocknet insbesondere nach dem Aufbringen des Primers, wie ggf. weitere zugegebene Lösungsmitte,

Im Rahmen der vorliegenden Erfindung wird daher zum einen die ungetrocknete Primerzusammensetzung betrachtet und zum anderen die getrocknete Primerzusammensetzung, die aus dem Verdampfen von Lösungsmittel und Wasser, insbesondere aus der aufgetragenen Primerschicht, resultiert.

Gemäß vorteilhafter Ausführungsformen der Erfindung enthält die Primerzusammensetzung vor dem Trocknen 5 bis 25 Gew.-%, bevorzugt 10 bis 23 Gew.-%, besonders bevorzugt 10 bis 16 Gew.-%, bezogen auf das Gesamtgewicht der ungetrockneten Primerzusammensetzung, einer wässrigen Emulsion enthaltend 40 Gew.-% Acrylat-Styrol-Copolymer und 60 Gew.-% Wasser.

Damit ist eine erfindungsgemäße Primerzusammensetzung bevorzugt, die 2 bis 10 Gew.-%, bevorzugt 4 bis 9,2 Gew.-%, besonders bevorzugt 4 bis 6,4 Gew.-%, bezogen auf das Gesamtgewicht der ungetrockneten Primerzusammensetzung, des wenigstens einen Acrylat-Styrol-Copolymers (a) enthält.

Bevorzugt enthält die getrocknete Primerzusammensetzung 20 bis 50 Gew.-%, besonders bevorzugt 25 bis 45 Gew.-%, ganz besonders bevorzugt 30 bis 40 Gew.-%, des wenigstens einen Acrylat-Styrol-Copolymers (a), jeweils bezogen auf das Gesamtgewicht der getrockneten Primerzusammensetzung.

Für den Fall, dass zwei oder mehrere verschiedene Acrylat-Styrol-Copolymere als Bestandteil (a) enthalten sind, beziehen sich die angegebenen Mengen auf die Gesamtmenge an Acrylat-Styrol-Copolymeren.

Mit den genannten Mengenangaben ergeben sich besonders vorteilhafte Eigenschaften, insbesondere eine besonders hohe Klebkraft vor dem Lösen der Klebeverbindung.

Die Primerzusammensetzung und eine damit hergestellte, ggf. getrocknete, Primerschicht ist durch (b) das wenigstens eine chemische oder physikalische Treibmittel expandierbar. Expandierbar bedeutet dabei, dass das Volumen des Primers nach der Expansion oberhalb dessen des Primers vor der Expansion liegt, gemessen jeweils bei gleicher Temperatur (in der Regel Raumtemperatur). Bevorzugt liegt die Volumenzunahme bei mehr als 5 %, besonders bevorzugt mehr als 20 %. Die Expansion kann chemisch oder physikalisch erfolgen.

Das Treibmittel liegt in der Primerzusammensetzung bevorzugt in einer Konzentration von 10 Gewichtsteilen bis zu 120 Gewichtsteilen bezogen auf 100 Gewichtsteile an enthaltenen Polymeren vor.

Gemäß vorteilhafter Ausführungsformen der Erfindung beträgt die Menge der enthaltenen Treibmittel (b) in der ungetrockneten Primerzusammensetzung 0,5 bis 10 Gew.-%, bevorzugt 0,5 bis 8 Gew.-%, besonders bevorzugt 3 bis 5 Gew.-%, bezogen auf das Gesamtgewicht der ungetrockneten Primerzusammensetzung.

Gemäß vorteilhafter Ausführungsformen der Erfindung beträgt die Menge der enthaltenen Treibmittel (b) in der getrockneten Primerzusammensetzung 10 bis 40 Gew.-%, bevorzugt 15 bis 35 Gew.-%, besonders bevorzugt 20 bis 30 Gew.-%, bezogen auf das Gesamtgewicht der getrockneten Primerzusammensetzung.

Bevorzugt handelt es sich bei dem Treibmittel um ein partikuläres Treibmittel. Bevorzugt liegt die mittlere Partikelgröße (d50) vor der Aktivierung unterhalb von 25 µm, insbesondere bevorzugt unterhalb von 17 µm. Ganz besonders bevorzugt liegt die mittlere Partikelgröße unterhalb von 3 µm, da somit eine dünne Primerschicht erreicht werden kann.

Weiter bevorzugt liegt die Partikelgröße oberhalb von 500 nm, damit ein für das Ablösen technisch nutzbarer Schäumungseffekt erreicht werden kann.

Unter "Partikeln" des Treibmittels werden im Sinne von DIN 53206-1: 1972-08 Primärteilchen, Aggregate und Agglomerate des Treibmittels verstanden. Unter der "Partikelgröße" wird die maximale Ausdehnung eines Partikels verstanden. Die Bestimmung der Partikelgröße erfolgt mittels Laserbeugung nach ISO 13320 (wobei im Dispersionsschritt Agglomerate dispergiert werden, nicht jedoch Aggregate).

Gemäß bevorzugter Ausführungsformen der Erfindung liegt das Treibmittel, insbesondere das partikuläre Treibmittel, in der getrockneten, nicht aktivierten Primerschicht im Wesentlichen in mehreren, zumindest zwei, gepackten Lagen vor. Durch die Packung wird die Expansion und damit die Trennbarkeit des Klebeverbunds verbessert.

Gemäß weiterer bevorzugter Ausführungsformen der Erfindung liegt das Treibmittel, insbesondere das partikuläre Treibmittel, in der getrockneten, nicht aktivierten Primerschicht im Wesentlichen in einer Lage vor. Durch die Beschränkung auf eine Lage kann die Primerschicht dünner aufgetragen werden, was Vorteile in der Applikation (z.B. kürzere Ablüftzeiten, weniger Verfließen) und der Primerwirkung ergibt.

Im Wesentlichen bedeutet hier, dass die jeweilige Anordnung der Partikel auf mehr als 60 % der mit Primer beschichteten Fläche gegeben ist.

Die Basistypen der chemischen Treibmittel lassen sich ihrer Natur nach in organische und anorganische Verbindungen unterteilen. Legt man ihr Zersetzungsverhalten zugrunde, so unterscheidet man zwischen exothermen (1-5) und endothermen (6) Treibmitteln. Im

Einzelnen handelt es sich beispielsweise um Verbindungen aus den folgenden Produktklassen:
1. Azoverbindungen:
   bevorzugt Azodicarbonsäurediamid (ADC)
2. Hydrazinderivate:
   bevorzugt p-Toluolsulfonylhydrazid (TSH)
   und p,p'-Oxibis(benzolsulfonylhydrazid) (OBSH)
3. Sulfonylsemicarbazide:
   bevorzugt p-Toluolsulfonylsemicarbazid (TSSC)
4. Tetrazole:
   bevorzugt 5-Phenyltetrazol (5-PT)
5. N-Nitrosoverbindungen:
   bevorzugt N,N'-Dinitrosopentamethylentetramin (DNPT)
6. Carbonate:
   bevorzugt Natriumhydrogencarbonat (NaHCO₃), Zinkcarbonat (ZnCO₃).

Als physikalische Treibmittel können alle dem Fachmann bekannten physikalischen Treibmittel verwendet werden.

Besonders bevorzugt ist das Treibmittel (b) ein physikalisches Treibmittel, Bevorzugt werden expandierbare, thermoplastische Mikrosphären (Mikroballons), besonders bevorzugt thermisch expandierbare, thermoplastische Mikrosphären verwendet.

Expandierbare thermoplastische Mikrosphären, die eine thermoplastische Polymerschale und ein darin eingeschlossenes Treibmittel umfassen, sind zum Beispiel unter der Marke EXPANCEL^{®} kommerziell erhältlich. In solchen Mikrosphären ist das Treibmittel in der Regel eine Flüssigkeit mit einem Siedepunkt nicht höher als die Erweichungstemperatur der thermoplastischen Polymerhülle.

Die Erweichungstemperatur der Polymerhülle liegt gemäß bevorzugter Ausführungsformen bei 0 bis 140 °C, am meisten bevorzugt von 30 bis 100 °C. Beim Erhitzen verdampft das Treibmittel und erhöht dabei den Innendruck und gleichzeitig erweicht die Schale, was zu einer erheblichen Vergrößerung der Mikrosphären führt. Die Temperatur, bei der die Expansion beginnt, heißt Tₛₜₐᵣₜ, während die Temperatur, bei der die maximale Ausdehnung erreicht wird, als Tₘₐₓ bezeichnet wird. Tₛₜₐᵣₜ für die expandierbaren Mikrosphären ist bevorzugt von 40 bis 140 °C, am meisten bevorzugt von 50 bis 100 °C. Tₘₐₓ der expandierbaren Mikrosphären ist höher als Tₛₜₐᵣₜ und vorzugsweise von 80 bis 200 °C, am meisten bevorzugt von 100 bis 170 °C.

Gemäß bevorzugter Ausführungsformen weist das Treibmittel eine Expansionstemperatur von 100 bis 150 °C auf.

Gemäß besonders bevorzugter Ausführungsformen weist das Treibmittel eine Expansionsstarttemperatur von mehr als 130 °C auf, da bei höheren Erweichungstemperaturen der Polymerhülle eine bessere Haltbarkeit des getrockneten Primers festgestellt wurde.

Gemäß weiterer besonders bevorzugter Ausführungsformen weist das Treibmittel eine Expansionsstarttemperatur von weniger als 130 °C auf, da hierbei die Aktivierungstemperatur niedrig ist.

Die Expansionstemperatur ist in der Regel dem Datenblatt der Lieferanten zu entnehmen. Sie wird für expandierbare Mikrosphären mittels thermomechanischer Analyse (TMA) bei einer Aufheizrate von 20 K/min bei einer relativen Luftfeuchte von 50 % bestimmt. Für chemische Treibmittel wird der Onset einer DSC bei einer Aufheizrate von 20 K/min verwendet.

Gemäß besonders bevorzugter Ausführungsformen enthält die erfindungsgemäße Primerzusammensetzung als Treibmittel (b) Mikroballons, die im nicht expandierten Zustand bei 25 °C einen mittleren Durchmesser von 3 µm bis 30 µm, insbesondere von 5 µm bis 20 µm, und/oder nach Expansion einen mittleren Durchmesser von 10 µm bis 200 µm, insbesondere von 15 µm bis 90 µm, aufweisen. Der mittlere Durchmesser der nichtexpandierten Mikroballons liegt bevorzugt unterhalb der Schichtdicke des Primers.

Gemäß weiterer bevorzugter Ausführungsformen ist das Treibmittel (b) eine Mischung aus einem physikalischen und einem chemischen Treibmittel.

Bevorzugt enthält die Primerzusammensetzung ein (e) Rheologieadditiv, dass das Absetzen eines partikulären Treibmittels vermindert.

Als rheologische Additive werden Thixotropiermittel bevorzugt, wie sie zum Beispiel von den Firmen Erbslöh unter der Marke Disparlon und der Firma BYK unter den Marken Tixogel, Rheobyk und BYK-GO vertrieben werden.

Bevorzugt beträgt die Menge an Rheologieadditiven (e), insbesondere Thixotropiermitteln, in der ungetrockneten Primerzusammensetzung 0,1 bis 1 Gew.-%, besonders bevorzugt 0,1 bis 0,5 Gew.-%, ganz besonders bevorzugt 0,2 bis 0,4 Gew.-%.

Bevorzugt beträgt die Menge an Rheologieadditiven (e), insbesondere Thixotropiermitteln, in der getrockneten Primerzusammensetzung 0,7 bis 6 Gew.-%, besonders bevorzugt 1 bis 3 Gew.-%, ganz besonders bevorzugt 1,5 bis 2,5 Gew.-%.

Es hat sich herausgestellt, dass die der Erfindung zugrunde liegende Aufgabe besonders gut gelöst wird, wenn die Primerzusammensetzung wenigstens eine reaktive Verbindung umfasst. Unter einer "reaktiven Verbindung" wird eine chemische Verbindung mit wenigstens einer reaktiven Gruppe verstanden. Die entsprechende reaktive Verbindung kann durch die reaktive Gruppe mit dem Material der Oberfläche des zu verklebenden Substrates, wie beispielsweise Stahl oder einem Kunststoff wie Polybutylenterephthalat (PBT), als auch mit dem zu verklebenden Klebeband, wie beispielsweise über darin vorhandene Carboxylgruppen, reagieren. Weiterhin ist eine Reaktion mit dem oder den Polymeren des Primers, wie beispielsweise mit Caprolactamgruppen eines (Co)polymers von Vinylcaprolactam, denkbar. So entsteht eine chemische Verbindung zwischen der Oberfläche des Substrates und der Primerschicht bzw. zwischen der Primerschicht und dem Klebeband.

Besonders bevorzugt ist damit eine erfindungsgemäße Primerzusammensetzung, die (c) wenigstens ein Organosilan enthält.

Bei dem Organosilan kann es sich prinzipiell um alle dem Fachmann bekannten Verbindung des Typs R-Si(R¹R²R³), handeln, wobei R für einen organischen Rest steht, der Heteroatome enthalten kann und R¹, R² und R³ für die übrigen Reste am Siliziumatom stehen, die bevorzugt ausgewählt sind aus Alkoxygruppen und Alkylgruppen.

Die Reste R¹, R² und R³ können dabei unabhängig voneinander gleich oder verschieden sein.

Besonders bevorzugt sind R¹, R² und R³ Alkoxygruppen und wiederum bevorzugt ausgewählt aus Methoxy- und Ethoxygruppen.

Gemäß vorteilhafter Ausführungsformen der Erfindung ist das Organosilan (c) ausgewählt aus der Gruppe bestehend aus Trialkoxyphenylsilanen, insbesondere Triethoxyphenylsilan und Trimethoxyphenylsilan, (3-Mercaptopropyl)trialkoxysilanen, insbesondere (3-Mercaptopropyl)triethoxysilan und (3-Mercaptopropyl)trimethoxysilan, (3-Aminopropyl)alkoxysilanen, insbesondere (3-Aminopropyl)triethoxysilan, 3-(2-Aminoethylamino)propyltrialkoxyysilanen, insbesondere 3-(2-aminoethylamino)propyltrimethoxysilan, und (3-Glycidyloxypropyl)trialkoxysilanen, insbesondere (3-Glycidyloxypropyl)trimethoxysilan.

Gemäß besonders vorteilhafter Ausführungsformen der Erfindung ist das Organosilan (c) ausgewählt aus der Gruppe bestehend aus Triethoxyphenylsilan, Trimethoxyphenylsilan, (3-Mercaptopropyl)triethoxysilan, (3-Mercaptopropyl)trimethoxysilan, (3-Aminopropyl)triethoxysilan, 3-(2-aminoethylamino)propyltrimethoxysilan, und (3-Glycidyloxypropyl)trimethoxysilan.

Wiederum bevorzugt ist das Organosilan (c) ausgewählt aus der Gruppe bestehend aus Triethoxyphenylsilan, Trimethoxyphenylsilan, (3-Mercaptopropyl)triethoxysilan und (3-Mercaptopropyl)trimethoxysilan und weiter bevorzugt ausgewählt aus der Gruppe bestehend aus Triethoxyphenylsilan und (3-Mercaptopropyl)trimethoxysilan.

Ganz besonders bevorzugt ist als Organosilan (c) Triethoxyphenylsilan in der Primerzusammensetzung enthalten.

Gemäß vorteilhafter Ausführungsformen der Erfindung beträgt die Menge der enthaltenen Organosilane (c) in der ungetrockneten Primerzusammensetzung 0,5 bis 5,0 Gew.-%, bevorzugt 1,0 bis 4,0 Gew.-%, besonders bevorzugt 2,0 bis 3,6 Gew.-%, bezogen auf das Gesamtgewicht der ungetrockneten Primerzusammensetzung.

Gemäß vorteilhafter Ausführungsformen der Erfindung beträgt die Menge der enthaltenen Organosilane (c) in der getrockneten Primerzusammensetzung 5 bis 30 Gew.-%, bevorzugt 10 bis 30 Gew.-%, besonders bevorzugt 13 bis 23 Gew.-%, bezogen auf das Gesamtgewicht der getrockneten Primerzusammensetzung.

Bevorzugt beträgt dabei das Mengenverhältnis der Gesamtmenge an Acrylat-Styrol-Copolymer (a) zu der Gesamtmenge an Organosilan (c) 1,5:1 bis 3:1, besonders bevorzugt 1,5:1 bis 2,2:1.

Organische Lösungsmittel und Wasser werden bei diesem Mengenverhältnis nicht mit einbezogen.

Ferner hat sich herausgestellt, dass Vorhandensein von Titantetraisopropanolat als reaktive Verbindung, welches in den Beispielen der EP 4155360 A1 verwendet wird, bei einigen Ausführungsformen der Erfindung zu einer etwas schlechteren Primerwirkung nach dem Trocknen der Primerschicht führt. Gemäß vorteilhafter Ausführungsformen der Erfindung ist die Primerzusammensetzung daher frei von Titantetraisopropanolat und enthält somit 0 Gew.-% Titantetraisopropanolat und zwar insbesondere, wenn zugleich Wasser in der Primerzusammensetzung vorhanden ist, wie beispielsweise im Fall der Zugabe des (a) wenigstens einen Acrylat-Styrol-Copolymers in wässriger Dispersion.

Es hat sich herausgestellt, dass die der Erfindung zugrunde liegende Aufgabe besonders gut gelöst wird, wenn die Primerzusammensetzung (d) wenigstens ein weiteres Polymer enthält.

Bei dem weiteren Polymer kann es sich um alle dem Fachmann bekannten Polymere handeln, insbesondere solche, die in Haftklebemassen eingesetzt werden, also zum Beispiel Polymere auf der Basis von Acrylaten und/oder Methacrylaten, Polyurethane, Naturkautschuke, Synthesekautschuke, Styrolblockcopolymere mit einem Elastomerblock aus ungesättigten oder hydrierten Polydienblöcken (Polybutadien, Polyisopren, Copolymere aus beiden sowie weitere, dem Fachmann geläufige Elastomerblöcke), Polyolefine, Fluorpolymere und/oder Silikone.

Bevorzugt umfasst das weitere Polymer (d) ein Polyacrylat und/oder Polymethacrylat.

Gemäß bevorzugter Ausführungsformen der Erfindung ist das weitere Polymer (d) ein Copolymer auf der Basis von Acrylsäureestern.

Besonders bevorzugt ist das weitere Polymer (d) ein Copolymer von zumindest einem Acrylsäureester und Vinylcaprolactam, ganz besonders bevorzugt ein Copolymer von n-Butylacrylat und Vinylcaprolactam.

Vorzugsweise ist das Polyacrylat und/oder Polymethacrylat frei von (Meth)Acrylsäure, das heißt, dass bevorzugt bei der Herstellung des Polyacrylats und/oder Polymethacrylats keine (Meth)Acrylsäure verwendet wird.

Gemäß vorteilhafter Ausführungsformen der Erfindung beträgt die Menge an weiteren Polymeren (d) in der ungetrockneten Primerzusammensetzung 0,5 bis 5,0 Gew.-%, bevorzugt 1,0 bis 4,0 Gew.-%, besonders bevorzugt 2,0 bis 3,6 Gew.-%, bezogen auf das Gesamtgewicht der ungetrockneten Primerzusammensetzung.

Gemäß vorteilhafter Ausführungsformen der Erfindung beträgt die Menge an weiteren Polymeren (d) in der getrockneten Primerzusammensetzung 5 bis 35 Gew.-%, bevorzugt 10 bis 30 Gew.-%, besonders bevorzugt 15 bis 25 Gew.-%, bezogen auf das Gesamtgewicht der getrockneten Primerzusammensetzung.

Eine besonders bevorzugte getrocknete Primerzusammensetzung enthält bezogen auf das Gesamtgewicht der getrockneten Primerzusammensetzung:
(a) 30 bis 40 Gew.-% des wenigstens einen Acrylat-Styrol-Copolymers, und
(b) 20 bis 30 Gew.-% Treibmittel, insbesondere expandierbare Mikrosphären; und
(c) 13 bis 23 Gew.-% wenigstens eines Organosilans; und
(d) 15 bis 25 Gew.-% an weiteren Polymeren, insbesondere Poly(meth)acrylaten; und
(e) 1,5 bis 2,5 Gew.-% an Rheologieadditiven, insbesondere Thixotropiermitteln.

Bevorzugt beträgt die Summe der Mengen der Bestandteile (a) bis (e) 100 Gew.-%.

Die Herstellung der erfindungsgemäßen Primerzusammensetzung erfolgt insbesondere dadurch, dass die genannten Bestandteile (a) und (b) und optional (c) und/oder (d) sowie optional weitere Additive, wie Rheologieadditive, zusammengegeben und miteinander vermischt werden.

Bevorzugt wird dabei das Treibmittel (b), insbesondere im Fall von expandierbaren Mikrosphären, in einem späten Verfahrensschritt, insbesondere als letzter Bestandteil, hinzugegeben.

Die Bestandteile werden insbesondere in wenigstens einem organischen Lösungsmittel und/oder Wasser miteinander vermischt.

Bei der Verwendung der oben beschriebenen wässrigen Emulsion des Bestandteils (a) wird bereits hierdurch Wasser als Flüssigkeit in die Zusammensetzung eingetragen. Weitere Bestandteile, wie beispielsweise das weitere Polymer (d) werden bevorzugt ebenfalls in einem Lösungsmittel zugegeben. Im Fall eines Poly(meth)Acrylates ist dies insbesondere das Lösungsmittel, in dem das Polymer hergestellt wurde.

Bevorzugt wird dabei ein entsprechend polares Lösungsmittel verwendet, sodass es zu keiner Trennung zwischen einer wässrigen und einer organischen Phase kommt.

Unter "Lösungsmittel" werden im Rahmen der vorliegenden Erfindung andere Lösungsmittel als Wasser verstanden, insbesondere organische Lösungsmittel.

Die erfindungsgemäße Primerzusammensetzung wird insbesondere und bevorzugt durch Zugabe von weiterem Lösungsmittel und/oder Wasser auf einen gewünschten Feststoffgehalt, insbesondere im Hinblick auf eine gewünschte Viskosität eingestellt, sodass sie an die jeweiligen Bedingungen beim Auftragen zur Herstellung der Klebeverbindung angepasst ist.

Gemäß bevorzugter Ausführungsformen beträgt die Gesamtmenge an Wasser und Lösungsmitteln 70 bis 90 Gew.-%, bevorzugt 80 bis 90 Gew.-%, bezogen auf das Gesamtgewicht der ungetrockneten Primerzusammensetzung.

Aus dem Auftragen der erfindungsgemäßen Primerzusammensetzung auf ein Substrat, beispielsweise auf ein Bauteil oder eine Klebemasse, resultiert somit insbesondere und bevorzugt eine zunächst ungetrocknete Primerschicht mit einer bestimmten Schichtdicke.

Vor dem Fügen einer weiteren Schicht auf diese Primerschicht erfolgt dann wie bereits beschrieben insbesondere und bevorzugt das Trocknen der Primerschicht, woraus eine getrocknete Primerschicht mit entsprechend reduzierter Schichtdicke resultiert.

Gemäß bevorzugter Ausführungsformen weist die getrocknete Primerschicht eine Anfassklebrigkeit auf und ist "haftklebrig".

Unter einem "haftklebrigen Stoff" wird erfindungsgemäß, wie allgemein üblich, ein Stoff verstanden, der - insbesondere bei Raumtemperatur - dauerhaft klebrig sowie klebfähig ist. Charakteristisch für einen Haftklebstoff ist, dass er durch Druck auf ein Substrat aufgebracht werden kann und dort haften bleibt, wobei der aufzuwendende Druck und die Einwirkdauer dieses Drucks nicht näher definiert werden. In manchen Fällen, abhängig von der genauen Art des Haftklebstoffs, der Temperatur und der Luftfeuchtigkeit sowie dem Substrat, reicht die Einwirkung eines kurzfristigen, minimalen Drucks, der über eine leichte Berührung für einen kurzen Moment nicht hinausgeht, um den Haftungseffekt zu erzielen, in anderen Fällen kann auch eine längerfristige Einwirkdauer eines hohen Drucks notwendig sein.

Haftklebstoffe haben besondere, charakteristische viskoelastische Eigenschaften, die zu der dauerhaften Klebrigkeit und Klebfähigkeit führen. Kennzeichnend für sie ist, dass, wenn sie mechanisch deformiert werden, es sowohl zu viskosen Fließprozessen als auch zum Aufbau elastischer Rückstellkräfte kommt. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad des Haftklebstoffes als auch von der Geschwindigkeit und Dauer der Deformation sowie von der Temperatur.

Der anteilige viskose Fluss ist zur Erzielung von Adhäsion notwendig. Nur die viskosen Anteile, hervorgerufen durch Makromoleküle mit relativ großer Beweglichkeit, ermöglichen eine gute Benetzung und ein gutes Anfließen auf das zu verklebende Substrat. Ein hoher Anteil an viskosem Fluss führt zu einer hohen Haftklebrigkeit (auch als Tack oder Oberflächenklebrigkeit bezeichnet) und damit oft auch zu einer hohen Klebkraft. Stark vernetzte Systeme, kristalline oder glasartig erstarrte Polymere sind mangels fließfähiger Anteile in der Regel nicht oder zumindest nur wenig haftklebrig.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Über-tragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

Zur genaueren Beschreibung und Quantifizierung des Maßes an elastischem und viskosem Anteil sowie des Verhältnisses der Anteile zueinander können die mittels Dynamisch Mechanischer Analyse (DMA) ermittelbaren Größen Speichermodul (G') und Verlustmodul (G") herangezogen werden. G' ist ein Maß für den elastischen Anteil, G" ein Maß für den viskosen Anteil eines Stoffes. Beide Größen sind abhängig von der Deformationsfrequenz und der Temperatur.

Die Größen können mit Hilfe eines Rheometers ermittelt werden. Das zu untersuchende Material wird dabei zum Beispiel in einer Platte-Platte-Anordnung einer sinusförmig oszillierenden Scherbeanspruchung ausgesetzt. Bei schubspannungsgesteuerten Geräten werden die Deformation als Funktion der Zeit und der zeitliche Versatz dieser Deformation gegenüber dem Einbringen der Schubspannung gemessen. Dieser zeitliche Versatz wird als Phasenwinkel δ bezeichnet.

Der Speichermodul G' ist wie folgt definiert: G' = (τ/γ) •cos(δ) (τ = Schubspannung, γ = Deformation, δ = Phasenwinkel = Phasenverschiebung zwischen Schubspannungs- und Deformationsvektor). Die Definition des Verlustmoduls G" lautet: G" = (τ/γ) •sin(δ) (τ = Schubspannung, γ = Deformation, δ = Phasenwinkel = Phasenverschiebung zwischen Schubspannungs- und Deformationsvektor).

Ein Stoff gilt im Allgemeinen als haftklebrig und wird im Sinne der Erfindung als haftklebrig definiert, wenn bei Raumtemperatur, hier definitionsgemäß bei 23 °C, im Deformationsfrequenzbereich von 10⁰ bis 10¹ rad/sec G' zumindest zum Teil im Bereich von 10³ bis 10⁷ Pa liegt und wenn G" ebenfalls zumindest zum Teil in diesem Bereich liegt. "Zum Teil" heißt, dass zumindest ein Abschnitt der G'-Kurve innerhalb des Fensters liegt, das durch den Deformationsfrequenzbereich von einschließlich 10⁰ bis einschließlich 10¹ rad/sec (Abszisse) sowie den Bereich der G'-Werte von einschließlich 10³ bis einschließlich 10⁷ Pa (Ordinate) aufgespannt wird. Für G" gilt dies entsprechend.

Haftklebstoffe wirken somit bei Raumtemperatur permanent haftklebrig, weisen also eine hinreichend geringe Viskosität und eine hohe Anfassklebrigkeit auf, so dass sie die Oberfläche des jeweiligen Klebegrunds bereits bei geringem Andruck benetzen. Die Verklebbarkeit der Haftklebestoffe beruht auf ihren adhäsiven Eigenschaften und die Wiederablösbarkeit - abhängig von der der Haftklebemasse innewohnenden Klebkraft - auf ihren kohäsiven Eigenschaften.

Ein weiterer Gegenstand der vorliegenden Erfindung ist ein Schichtkörper, umfassend
ein erstes Bauteil,
eine Primerschicht, die auf dem Bauteil ist,
wobei die Primerschicht auf einer erfindungsgemäßen Primerzusammensetzung
basiert, die aus einer flüssigen Phase aufgebracht wird,
ein Klebeband, insbesondere Haftklebeband, das über die Primerschicht mit dem ersten Bauteil verbunden ist.

Die Primerschicht weist bevorzugt nach dem Trocknen eine Schichtdicke von 0,05 µm bis 100 µm, insbesondere 1 µm bis 80 µm, auf.

Insbesondere und beispielsweise für den Fall, dass als Treibmittel (b) ein chemisches Treibmittel enthalten ist beträgt die Schichtdicke besonders bevorzugt von 1 bis 10 µm. Insbesondere und beispielsweise für den Fall, dass als Treibmittel (b) expandierbare Mikrosphären enthalten sind, beträgt die Schichtdicke bevorzugt 5 bis 40 µm, besonders bevorzugt 5 bis 30 µm.

Bevorzugt ist der Primer in einer geschlossenen Fläche (vollflächig) auf dem Bauteil aufgetragen.

Bevorzugt wird der Primer mittels eines Rakels oder einer Dosierdüse aufgetragen, insbesondere für den Fall, dass als Treibmittel (b) expandierbare Mikrosphären enthalten sind.

Besonders bevorzugt wird der Primer mit einer geführten Dosierdüse aufgetragen, z.B. "EV series automated dispensing systems" der Firma Nordson EFD.

Bevorzugt weist das verklebte Klebeband eine Schichtdicke von 2 µm bis 2000 µm auf.

Gemäß bevorzugter Ausführungsformen weist das Klebeband eine Schichtdicke von weniger als 300 µm auf, besonders bevorzugt von weniger als 100 µm und bevorzugt mindestens 2 µm.

Gemäß bevorzugter Ausführungsformen weist das Klebeband eine Schichtdicke von mehr als 30 µm auf, besonders bevorzugt von mehr als 100 µm und bevorzugt bis zu 2000 µm.

Die Schichtdicke der Primerschicht wird laseroptisch (CLSM (Konvokales Laser Microskop, Fa. Keyence) bestimmt.

Die Schichtdicke des Klebebandes wird mit einem Dickentaster auf dem Fachmann bekannte Weise bestimmt.

Der allgemeine Ausdruck "Klebeband" umfasst im Sinne dieser Erfindung alle flächigen Gebilde, deren Ausdehnung in zwei Raumrichtungen (x-Richtung und y-Richtung; Länge und Breite) wesentlich größer ist als in der dritten Raumrichtung (z-Richtung; Dicke) wie Folien oder Folienabschnitte, Bänder mit ausgedehnter Länge und begrenzter Breite, Bandabschnitte, Stanzlinge, Etiketten und dergleichen.

Das Klebeband kann in festen Längen wie zum Beispiel als Meterware oder aber als Endlosware auf Rollen (archimedische Spirale) zur Verfügung gestellt werden, also scheibenförmige Klebebandrollen, die in der Fachsprache als "pan-cake" bezeichnet werden.

Alternativ kann das Klebeband wie ein Textilgarn auf einen Kern aufgespult sein, dessen Länge wesentlich größer ist als die Breite des Klebebandes. Durch das Überlagern einer Rotationsbewegung des Kernes und einer axialen Bewegung des Kernes oder des Klebeband-Führungsorganes bildet das Klebeband zunächst eine erste, radial innerste Lage helixförmiger Windungen. Zum Abschluss der ersten Lage und Sprung in die zweite Lage wird bei unveränderter Rotationsbewegung die Orientierung der Axialbewegung invertiert. Zum Abschluss der zweiten Lage und Sprung in die dritte Lage wird bei weiterhin unveränderter Rotationsbewegung die Orientierung der Axialbewegung erneut invertiert, also wieder zur ursprünglichen Orientierung übergegangen. Zwischen jedem der Orientierungsumkehrpunkte bleibt der Steigungswinkel konstant. Auf diese Weise können zahlreiche Windungslagen gebildet werden, deren Windungen sich jeweils kreuzen (kreuzgewickelte Spulen).

Ein "Klebeband" umfasst gemäß bevorzugter Ausführungsformen ein Trägermaterial, welches ein- oder beidseitig mit einer (Haft)klebemasse versehen ist, und gegebenenfalls weitere, dazwischenliegende Schichten aufweisen kann.

Insbesondere umfasst der Ausdruck "Klebeband" im Sinne der vorliegenden Erfindung aber auch sogenannte "Transferklebebänder", das heißt ein Klebeband ohne Träger. Bei einem Transferklebeband ist die Klebemasse vielmehr vor der Applikation zwischen flexiblen Linern aufgebracht, die mit einer Trennschicht versehen sind und/oder antiadhäsive Eigenschaften aufweisen. Zur Applikation wird regelmäßig zunächst ein Liner entfernt, die Klebemasse appliziert und dann der zweite Liner entfernt. Die Klebemasse kann so direkt zur Verbindung zweier Oberflächen verwendet werden. Derartige trägerlose Transferklebebänder sind erfindungsgemäß besonders bevorzugt. Mit einem solchen, insbesondere haftklebrigen, trägerlosen Transferklebeband wird eine in Positionierung und Dosierung sehr genaue Verklebung ermöglicht.

Das Klebeband kann sowohl in Form einer Rolle, also in Form einer archimedischen Spirale auf sich selbst aufgerollt, als auch klebmasseseitig eingedeckt mit Trennmaterialien wie silikonisiertem Papier oder silikonisierter Folie hergestellt werden.

Als Trennmaterial eignet sich bevorzugt ein nicht-fusselndes Material wie eine Kunststofffolie oder ein gut verleimtes, langfaseriges Papier.

Gemäß besonders bevorzugter Ausführungsformen ist die Klebemasse des Klebebandes, die mit der Primerschicht in Berührung kommt, eine Haftklebemasse und das Klebeband somit ein Haftklebeband. Für die Definition von "haftklebrig" gelten die obigen Ausführungen im Zusammenhang mit der "Haftklebrigkeit" der getrockneten Primerschicht.

Gemäß bevorzugter Ausführungsformen der Erfindung ist auf der freien Seites des Klebebands ein zweites Bauteil verklebt.

Weiter vorzugsweise kann zwischen Klebeband und zweitem Bauteil eine weitere Schicht des erfindungsgemäßen Primers aufgebracht sein.

Des Weiteren ist Teil der Erfindung ein Verfahren zum Lösen eines erfindungsgemäßen Schichtkörpers wobei der Schichtkörper erwärmt wird, bis das im Primer vorhandene Treibmittel expandiert, so dass die Klebkraft der Primerschicht soweit reduziert wird, dass das Klebeband vom Bauteil entfernbar ist.

Entfernbar bedeutet hier, dass die Klebkraft des Verbunds nach Erwärmung des Schichtkörpers weniger als 50 %, bevorzugt weniger als 75 %, der Klebkraft vor der Erwärmung beträgt,
Überraschenderweise wurde im Rahmen der vorliegenden Erfindung gefunden, dass sogar eine Verringerung der Klebkraft von mehr als 90 %, teilweise mehr als 95 %, erreicht wird.

Der Schichtkörper kann durch jegliche Form der Wärmezufuhr erwärmt werden, zum Beispiel durch Konvektion (zum Beispiel in einem Ofen, mit einem Heißluftgebläse) oder durch Strahlungswärme (zum Beispiel durch einen Infrarotstrahler oder Laserstrahlung) oder durch Wärmeleitung (zum Beispiel auf einer Heizplatte) oder durch Erzeugung von Wärme im Schichtkörper (zum Beispiel durch Induktion, elektrischen Strom, chemische Reaktion oder Mikrowellen).

Die thermische Aktivierung der Treibmittel kann durch verschiedene Techniken erfolgen, insbesondere durch berührungslose Erwärmung (zum Beispiel Induktion oder Mikrowellen) oder durch elektrische Erwärmung (Joule-Effekt) oder thermische Erwärmung (Ofen, Heizplatte, Infrarotlampe, Tunnel), Heißluft, thermischer Zerfall).

Für die Induktions- oder Mikrowellenerwärmung können insbesondere die folgenden Füllstoffe verwendet werden: PEG, Ferrite, Carbonyleisen (hochreines Eisenpulver).

Für die Erwärmung durch elektrische Leitung können insbesondere die folgenden Füllstoffe verwendet werden: mit Silber beschichtete Kupferpartikel, mit Silber beschichtete Siliziumdioxidpartikel, Graphit, Ruß, Kohlenstoff-Nanoröhrchen, Silberpartikel. Diese Füllstoffe können verwendet werden, um der erfindungsgemäßen Zusammensetzung eine ausreichende Leitfähigkeit zu verleihen, um eine Erwärmung durch den Joule-Effekt unter der Wirkung des Durchgangs eines elektrischen Stroms zu ermöglichen. Diese Ladungen können auch verwendet werden, um der erfindungsgemäßen Zusammensetzung die Aufrechterhaltung der elektrischen Leitfähigkeit innerhalb der Baugruppe zu ermöglichen, was für bestimmte Anwendungen, insbesondere für die Ableitung elektrostatischer Ladungen, notwendig sein kann.

Um die Wärmeleitung der Zusammensetzung zu verbessern, können insbesondere die folgenden Füllstoffe verwendet werden: Graphit, Metallfüllstoffe, Bornitrid, Aluminiumoxid, Aluminiumhydroxid. Diese Wärmeleitung kann in bestimmten Baugruppen notwendig sein, zum Beispiel bei der Verklebung von Heizkörpern.

Nach der thermischen Aktivierung erfolgt die Ablösung vorzugsweise bei Raumtemperatur, was vorteilhaft ist, weil sich die Materialien (insbesondere die Träger) so leichter und ohne spezielle Geräte für die Handhabung heißer Oberflächen handhaben lassen. Die Ablösung kann manuell oder automatisch erfolgen.

Durch Wärmeeinwirkung verdampft zum einen die in den Mikroballons enthaltene Flüssigkeit, zum anderen erweicht die äußere Polymerhülle. Somit dehnen sich die Kapseln irreversibel aus und expandieren dreidimensional. Die Expansion ist beendet, wenn sich der Innen- und der Außendruck ausgleichen.

Durch das Expandieren der Mikroballons oder allgemein durch die Expansion des Treibmittels werden Klebeband und Bauteil auseinandergedrückt. Gleichzeitig reduziert sich die Klebkraft, die dem Primer gegenüber dem Klebeband beziehungsweise dem Bauteil entwickelt hat.

Für den erfindungsgemäßen Schichtkörper gibt es eine große Vielzahl von Anwendungsmöglichkeiten. Ein Beispiel ist das Demontieren von Touchpanels. Angesichts der großen Bedeutung von Mobiltelefonen ist dies ein besonders wichtiger Anwendungsbereich. Auf der einen Seite ist eine sehr starke und vor allem auch dichtende Verklebung der Displays von Mobiltelefonen gewünscht. Auf der anderen Seite ist es häufig eben doch erforderlich, das Display zu entfernen. Der erfindungsgemäße Schichtkörper ist für diesen Einsatzzweck bestens geeignet.

Schließlich ist die sogenannte "Reworkability" ein Thema, das zunehmend an Bedeutung gewinnt. Beispielsweise in der Automobilindustrie steigen die Anforderungen an eine sortenreine Entsorgung der Produkte am Ende ihres Lebenszyklus. Daher ist es wichtig, dass Komponenten, die aus unterschiedlichen Materialien bestehen, vor ihrer Entsorgung wieder in die einzelnen Komponenten getrennt werden müssen, auch wenn diese Komponenten vorher "untrennbar" miteinander verbunden waren. Die vorliegende Erfindung ermöglicht eine sehr feste und dauerhafte Verbindung von unterschiedlichen Komponenten und lässt dennoch deren Trennung auf Anforderung zu.

### Messmethoden

Die Messungen werden - soweit nicht ausdrücklich anders erwähnt - bei einem Prüfklima von 23 ± 1 °C und 50 ± 5 % rel. Luftfeuchte durchgeführt.

### Klebkräfte

Die Klebkräfte werden analog ISO 29862 (Methode 3) bei 23 °C und 50 % relativer Luftfeuchte bei einer Abzugsgeschwindigkeit von 300 mm/min und einem Abzugswinkel von 180° bestimmt. Die Dicke der getrockneten Primerschicht beträgt dabei 30 µm. Als Verstärkungsfolie wird eine geätzte PET-Folie mit einer Dicke von 36 µm verwendet, wie sie von der Firma Coveme (Italien) erhältlich ist.

Als Substrat werden Stahlplatten (50 mm x 125 mm x 1,1 mm) entsprechend der Norm verwendet. Die Verklebung des Messstreifens (13 mm) wird dabei mittels einer Anrollmaschine mit 4 kg bei einer Temperatur von 23 °C vorgenommen. Die Zeit zwischen dem letzten Überrollen des Klebebandes und dem Abziehen beträgt 3 Tage.

Der Messwert (in N/cm) ergab sich als Mittelwert aus drei Einzelmessungen. Ermittelt wurde neben der Klebkraft die Art des Versagens der Klebverbindung.

### Molmasse (GPC)

Die Angaben der zahlenmittleren Molmasse Mₙ und der gewichtsmittleren Molmasse M_{w} in dieser Schrift beziehen sich auf die an sich bekannte Bestimmung per Gelpermeationschromatographie (GPC). Die Bestimmung erfolgt an 100 µl klarfiltrierter Probe (Probenkonzentration 0,5 g/I). Als Eluent wird Tetrahydrofuran mit 0,1 Vol.-% Trifluoressigsäure eingesetzt. Die Messung erfolgt bei 35 °C.

Als Vorsäule wird eine Säule Typ SDV (Agilent), 10 µm, 8,0 mm * 50 mm (Angaben hier und im Folgenden in der Reihenfolge: Typ, Partikelgröße, Innendurchmesser * Länge) verwendet. Zur Auftrennung wird eine Mixbed Säule des Typs SDV (Agilent), 10 µm, 8,0 mm * 300 mm eingesetzt kombiniert mit SDV 10 µm, mit einer Porosität von 10⁷ Å (1 Å = 10⁻¹⁰ m) und 8,0 mm * 50 mm (Säulen der Firma Agilent; Detektion mittels Differentialrefraktometer SECcurity (RI)). Die Durchflussmenge beträgt 0,5 ml pro Minute. Die Kalibrierung wird mittels des kommerziell verfügbaren ReadyCal^{®}-Kit Poly(styrene) high der Firma Agilent durchgeführt. Die erhaltenen Werte werden anhand der Mark-Houwink-Parameter K und alpha universell in Polymethylmethacrylat (PMMA) umgerechnet, so dass die Angabe der Daten in PMMA-Massenäquivalenten erfolgt.

### K-Wert

Der K-Wert ist ein Maß für die durchschnittliche Molekülgröße hochpolymerer Stoffe. Zur Messung wurden einprozentige (1g/100 ml) toluolische Polymerlösungen herstellt und mit Hilfe eines VOGEL-OSSAG-Viskosimeters deren kinematische Viskositäten bestimmt. Nach Normierung auf die Viskosität des Toluols wird die relative Viskosität erhalten, aus der sich nach FIKENTSCHER der K-Wert errechnen lässt (Polymer 8/1967, 381 ff.)

Im Folgenden wird die Erfindung durch Beispiele näher erläutert, ohne die Erfindung damit einschränken zu wollen.

### Beispiele

### Verwendete Substanzen

Polymer P2: NeoCryl^{®} XK-85, Fa. Covestro: 40 Gew.-% Acrylat-Styrol-Coplymer in wässriger Emulsion;
MB: thermisch expandierbare, thermoplastische Mikroballons, Expancel^{®} 920 DU 40, Fa. Nouryon;
TEP: Triethoxyphenylsilan;
Polymer P1: Copolymer aus n-Butylacrylat und Vinylcaprolactam, hergestellt, wie unten beschrieben;
TPT: Titantetraisopropanolat, TYZOR^{®} TPT, Lehmann & Voß, CAS 546-68-9; RHEOBYK 7410 ET, Fa. BYK: flüssiges Rheologieadditiv;
Lösungsmittel je nach Angabe: Ethylacetat und/oder Isopropanol.

Herstellung des Copolymers P1:
Zur Herstellung des Copolymers P1 wurden die folgenden Rohstoffe verwendet:
- 70 Gew.-% n-Butylacrylat, (CAS: 141-32-2) und
- 30 Gew.-% Vinylcaprolactam (CAS: 2235-00-9)

Das Copolymer wurde auf dem Fachmann bekannte Weise in einem Lösungsmittelgemisch aus Ethylacetat/Isopropylalkohol (168/1) mittels radikalischer Polymerisation hergestellt. Das Copolymer weist einen K-Wert von etwa 84 auf und wurde auf einen Feststoffgehalt (FG) von 30 Gew.-% eingestellt.

Die Zusammensetzungen der Beispiele sind in Tabelle 1 zusammengefasst. Die Zahlenangaben bei den einzelnen Bestandteilen stellen Gew.-% dar, wobei die Summe jeweils 100 Gew.-% ergibt.

Die Mengen des oder der mit den Polymeren zugegebenen Lösungsmittel oder Wasser sind in Tabelle 1 von den jeweiligen Polymermengen getrennt aufgeführt und mit der zum Verdünnen zugegebenem Lösungsmittelmenge zusammengerechnet angegeben.

Erfindungsgemäße Beispiele sind dabei mit "E" und Vergleichsbeispiele mit "V" gekennzeichnet.

Die Mengenangaben stellen Gewichtsprozent bezogen auf das Gesamtgewicht der ungetrockneten Primerzusammensetzung dar.

### Erfindungsgemäße Beispiele

Zur Herstellung der jeweiligen Primerzusammensetzungen wurden die angegebenen Rohstoffe/ Komponenten mit einem Magnetrührer der Firma IKA^{®} unter Verwendung eines Magnetrührstabes etwa 20 Minuten gemischt und ggf. durch weitere Zugabe von Ethylacetat auf den jeweils in Tabelle 1 angegebenen Gesamtfeststoffgehalt (FG) verdünnt.

Beim Vergleichsbeispiel V1 aus dem Stand der Technik EP 4155360 A1 wurde im Unterschied dazu wie in der EP 4155360 A1 angegeben mit Isopropanol verdünnt.

Die Feststoffgehalte wurden bei sämtlichen Beispielen jeweils so gewählt, dass eine ausreichende Schichtbildung ermöglicht wurde, sodass die entsprechenden Versuche durchgeführt werden konnten.

### Herstellung der Prüfkörper

Die Herstellung einer Schicht mit dem erfindungsgemäßen Primer erfolgt in dem Fachmann bekannter Weise, indem auf einem Substrat (Stahlplatte) zunächst der Primer in definierter Schichtdicke aufgebracht wird (mittels Rakeltechnik). Im Anschluss lässt man das oder die Lösemittel verdunsten, woraufhin das Testklebeband auf den nunmehr mit dem getrockneten Primer in einer Schichtdicke von 30 µm versehene Substrat appliziert werden kann. Zwischen Aufbringen und Verdunsten des Lösemittels und der Applikation des Testklebebandes können nur wenige Minuten, aber auch einige Tage oder Wochen liegen.

Das Testklebeband, mit dem die Primer geprüft wurden, basiert auf einem Polyacrylat-Haftklebstoff. Es handelt sich um das Acrylatschaumklebeband tesa^{®} 75120.

tesa^{®} 75120 ist ein doppelseitiges schwarzes Klebeband, das aus einem hochstoßdämpfenden schwarzen Acrylatschaum besteht.

Die Dicke liegt bei 200 µm.

Die Klebkraft auf Stahl (initial) liegt bei 13 N/cm, die Klebkraft auf Polycarbonat (initial) bei 10,9 N/cm.

### Aktivierung der Treibmittel

Zur Aktivierung der Treibmittel wurden die Prüfkörper für 5 Minuten bei 150 °C in einem Umluftofen gelagert. Durch das Aktivieren der Treibmittel wird die gemessene Klebkraft reduziert. Nach der thermischen Aktivierung erfolgt das Messen der Klebkraft bei Raumtemperatur vorzugsweise nach einer Abkühlzeit von 5 Minuten.

Alternativ, wenn es sich bei dem Substrat um ein thermisch leitfähiges Substrat handelt, können die Treibmittel auch durch Platzieren der Prüfkörper auf einer Präzisionsheizplatte (1 Minute bei 155 °C) aktiviert werden.

Zur Charakterisierung der hergestellten Muster wurden Klebkräfte vor und nach Aktivierung im Umluft-Heizofen bestimmt. Die erhaltenen Ergebnisse sind ebenfalls in Tabelle 1 angegeben.

Die Klebkraftergebnisse sind überwiegend auf die adhäsive Ablösung des jeweiligen Klebebandes zurückzuführen. Lediglich bei Werten von mehr als 35 N/cm, wie bei E1, ist auch eine kohäsive Ablösung zu beobachten.

Wie anhand des erfindungsgemäßen Beispiels E1 erkennbar, wird mit der erfindungsgemäßen Primerzusammensetzung eine deutlich höhere Klebkraft vor der Aktivierung erzielt. Gleichzeitig zeigt das Beispiel E1 die stärkste prozentuale Reduzierung der Klebkraft durch die Aktivierung, was an der Klebkraft nach Aktivierung im Verhältnis zur Ausgangsklebkraft (Klebkraft vor Aktivierung) erkennbar ist.

**Tabelle 1**

| **Bestandteile** | **V1** | **V2** | **V3** | **V4** | **E1** |
|---|---|---|---|---|---|
| P1 | 9 | 2,68 | 7,8 | 2,86 | 2,86 |
| P2 | - | - | - | 5,2 | 5,2 |
| Wasser | - | - | - | 7,8 | 7,8 |
| TEP | - | - | - | 2,8 | 2,8 |
| TPT | 0,4 | 2,7 | 2,7 | - | - |
| MB | 10 | 4,0 | 3,7 | - | 3,9 |
| RHEOBYK | - | 0,3 | 0,3 | - | 0,3 |
| Ethylacetat | 20,9 | 90,28 | 85,4 | 81,3 | 77,1 |
| Isopropanol | 59,7 | 0,04 | 0,1 | 0,04 | 0,04 |
| **GesamtFeststoffgehalt [%]** | 19,4 | 9,68 | 14,5 | 10,9 | 15,1 |

| **Eigenschaften** | | | | | |
|---|---|---|---|---|---|
| Klebkraft vor Aktivierung [N/cm] | 12,3 | 6,9 | 25,7 | 0,2 | 35,1 |
| Klebkraft nach Aktivierung [N/cm] | 0,4 | 4,1 | 8,5 | - | 0,5 |

## Patentansprüche

1. Primerzusammensetzung zur Herstellung einer lösbaren Klebeverbindung, enthaltend wenigstens folgende Bestandteile:
(a) wenigstens ein Acrylat-Styrol-Copolymer; und
(b) wenigstens ein chemisches oder physikalisches Treibmittel.

2. Primerzusammensetzung nach Anspruch 1, **dadurch gekennzeichnet, dass** sie (c) wenigstens ein Organosilan enthält.

3. Primerzusammensetzung nach einem der Ansprüche 1 oder 2, **dadurch gekennzeichnet, dass** sie (d) wenigstens ein weiteres Polymer enthält.

4. Primerzusammensetzung nach einem der Ansprüche 1 bis 3, **dadurch gekennzeichnet, dass** das Treibmittel (b) ein physikalisches Treibmittel ist, bevorzugt thermisch expandierbare, thermoplastische Mikrosphären.

5. Primerzusammensetzung nach Anspruch 2, **dadurch gekennzeichnet, dass** das Organosilan (c) ausgewählt ist aus der Gruppe bestehend aus Trialkoxyphenylsilanen, insbesondere Triethoxyphenylsilan und Trimethoxyphenylsilan, (3-Mercaptopropyl)trialkoxysilanen, insbesondere (3-Mercaptopropyl)triethoxysilan und (3-Mercaptopropyl)trimethoxysilan, (3-Aminopropyl)alkoxysilanen, insbesondere (3-Aminopropyl)triethoxysilan, 3-(2-Aminoethylamino)propyltrialkoxyysilanen, insbesondere 3-(2-aminoethylamino)propyltrimethoxysilan, und (3-Glycidyloxypropyl)trialkoxysilanen, insbesondere (3-Glycidyloxypropyl)trimethoxysilan, wobei das Organosilan (c) bevorzugt ausgewählt ist aus der Gruppe bestehend aus Triethoxyphenylsilan, Trimethoxyphenylsilan, (3-Mercaptopropyl)triethoxysilan und (3-Mercaptopropyl)trimethoxysilan und weiter bevorzugt ausgewählt ist aus der Gruppe bestehend aus Triethoxyphenylsilan und (3-Mercaptopropyl)trimethoxysilan.

6. Primerzusammensetzung nach Anspruch 3, **dadurch gekennzeichnet, dass** das weitere Polymer (d) ein Polyacrylat und/oder Polymethacrylat umfasst.

7. Primerzusammensetzung nach Anspruch 6, **dadurch gekennzeichnet, dass** das weitere Polymer (d) ein
Copolymer auf der Basis von Acrylsäureestern umfasst, bevorzugt ein Copolymer von zumindest einem Acrylsäureester und Vinylcaprolactam, besonders bevorzugt ein Copolymer von n-Butylacrylat und Vinylcaprolactam.

8. Primerzusammensetzung nach einem der vorherigen Ansprüche, **dadurch gekennzeichnet, dass** sie 2 bis 10 Gew.-%, bevorzugt 4 bis 9,2 Gew.-%, besonders bevorzugt 4 bis 6,4 Gew.-%, des wenigstens einen Acrylat-Styrol-Copolymers (a) enthält.

9. Primerzusammensetzung nach einem der vorherigen Ansprüche, **dadurch gekennzeichnet, dass** das wenigstens eine Acrylat-Styrol-Copolymer (a) eine gewichtsmittlere Molmasse Mw von 25.000 bis 300.000 g/mol, bevorzugt von 25.000 bis 100.000 g/mol, aufweist.

10. Schichtkörper umfassend
ein erstes Bauteil,
eine Primerschicht, die auf dem Bauteil ist,
wobei die Primerschicht auf einer Primerzusammensetzung nach einem der Ansprüche 1 bis 9 basiert, die aus einer flüssigen Phase aufgebracht wird,
ein Klebeband, insbesondere Haftklebeband, das über die Primerschicht mit dem ersten Bauteil verbunden ist.

11. Schichtkörper nach Anspruch 10, **dadurch gekennzeichnet, dass** auf der freien Seite des Klebebands ein zweites Bauteil verklebt ist.

12. Verfahren zum Lösen eines Schichtkörpers nach Anspruch 10 oder 11, wobei der Schichtkörper erwärmt wird, bis das im Primer vorhandene Treibmittel expandiert, so dass die Klebkraft der Primerschicht soweit reduziert wird, dass das Klebeband vom Bauteil entfernbar ist.

13. Verwendung eines Schichtkörpers nach einem der Ansprüche 10 oder 11 in der Automobilindustrie, insbesondere in einem Automobil.

14. Verwendung eines Schichtkörpers nach einem der Ansprüche 10 oder 11 in der Elektronikindustrie, insbesondere in einem elektronischen Gerät.
